# EUROPÄISCHE PATENTSCHRIFT

(11) **EP 0 835 903 B1**
(45) Veröffentlichungstag und Bekanntmachung des Hinweises auf die Patenterteilung: **08.05.2002**
(21) Anmeldenummer: 97117111.1
(22) Anmeldetag: 02.10.1997
(51) Int. Cl.: C08K 5/20, C08J 3/22

(54) **Polyamid-Masterbatch mit verbesserten Gleit- und Antiblock-Eigenschaften und dessen Anwendung**
Polyamide masterbatch with improved sliding and anti-block properties and its use
Mélange mère de polyamide ayant des propriétés de glissement améliorées et son utilisation

(30) Priorität: 09.10.1996 DE 19641659
(43) Veröffentlichungstag der Anmeldung: 15.04.1998
(73) Patentinhaber: EMS-INVENTA AG, 8002 Zürich (CH)
(72) Erfinder: Treutlein, Roland, Dipl.-Ing., 7418 Tomils (CH)
(74) Vertreter: Pfenning, Meinig & Partner

(56) Entgegenhaltungen:
- EP-A- 0 705 877
- DE-A- 2 643 204
- DE-A- 3 529 788
- US-A- 5 109 049
- CHEMICAL ABSTRACTS, vol. 122, no. 16, 17.April 1995 Columbus, Ohio, US; abstract no. 190288, MATSUZAKI, H.: "Black dope dyed polyamide fibers with high toughness" XP002046140 & JP 06 341 016 A (TORAY INDUSTRIES)
- PATENT ABSTRACTS OF JAPAN vol. 018, no. 625 (C-1279), 29.November 1994 & JP 06 240134 A (TORAY IND INC), 30.August 1994,

## Beschreibung

Die Erfindung betrifft ein Masterbatch auf der Basis von Polyamid und dessen Anwendung.

In der verarbeitenden Kunststoffindustrie ist die Verwendung von Masterbatchen zur Erzielung gewünschter Eigenschaften wie Einfärbung, Antistatik-Ausrüstung, Antiblockfunktion, Fließhilfen usw. weitverbreitet.

Masterbatche werden eingesetzt, da diese gegenüber den reinen Additiven eine Reihe von Vorteilen bieten, wie saubere Handhabung, genauere Dosierung, deutlich geringere Entmischungsgefahr, problemlose Kombination von verschiedenen Additiven und rasche gleichmäßige Verteilung der Additive in der Polymermasse.

In der Regel wird als Trägermaterial für die Additive des Masterbatches das für die Anwendung in Frage kommende Basismaterial oder ein mit diesem Basismaterial verträgliches Material verwendet.

Obwohl Masterbatche auch in der Verarbeitung von Polyamiden weit verbreitet sind und Teilprobleme befriedigend lösen können, konnte bisher noch kein auf Polyamid basierender Masterbatch bereitgestellt werden, der die folgenden Problemlösungen und Marktbedürfnisse in einem einzigen Masterbatch-Material erfüllen kann:
a) Trägermaterial und Basismaterial identisch und verträglich
b) Antiblockfunktionen
c) erhöhte Gleiteigenschaft des hergestellten Artikels (verbesserte Oberflächengleitung)
d) sterilisationssichere Additive

Bis heute ist aus der US 5,109,049 (American National Can Company) ein Polyamid-Masterbatch bekannt, welcher Antiblockfunktionen bietet, aber keine Gleiteigenschaftsvorteile erbringt.

Von der Firma Hoechst wird in EP 0 662 534 A1 ein spezieller Polyamid-Masterbatch beschrieben, welcher sich bevorzugt zum Einfärben von aromatischen Polyamidfasern und geformten Gebilden eignet.

Masterbatch die Polyamid und N,N'-Ethylenbisstearamid enthalten sind auch aus der DE-A-3529788 JP-A-6341016 und der JP-A-6240134 bekannt.

Bis heute ist auf dem Markt kein einziger Masterbatch zu finden, der sich insbesondere für die Herstellung von Folien eignet und folgende Eigenschaften in einem einzigen Produkt vereint:
- Sehr gute Verträglichkeit mit dem Basismaterial und Einarbeitung, ohne daß dabei die wichtigsten Eigenschaften der Folie wie mechanische Festigkeiten, Barrierewirkung, optische Eigenschaften verschlechtert werden,
- Gleichmäßige Kristallinität der Folie
- Ausgezeichnete Gleitfähigkeit der Folie
- Gewährleistung von Antiblockeigenschaften
- Sterilisationssicherheit
- Lebensmittelzulassung

Bezüglich der verbesserten Gleitfähigkeit von Folien wird diese Eigenschaften vom Markt her in zunehmenden Maße gefragt, da neue Verpackungsautomaten, insbesondere zum Abpacken von Fleisch und Käse, eine hohe Gleitfähigkeit zur Erhöhung der Taktzahlen erfordern. Bei den neuen Verpackungsautomaten (Tiefziehanlagen) werden die maximal möglichen Taktzahlen durch die Lauf- und Gleitfähigkeit der Folien vorgegeben.

Die zu verpackenden Fleisch- und Käsestücke werden zudem immer größer und schwerer, was weiter erhöhte Anforderungen an die Verpackungsfolien stellt.

Als Meßwert für die Polyamidschicht von Verpackungsfolien fordert der Markt einen dynamischen Reibungskoeffizienten (COF) von 0.2 gemäß DIN 53375.

Neben diesem niedrigen Reibungskoeffizienten fordert der Markt aber auch, daß sämtliche oben erwähnten weiteren Eigenschaften ebenfalls in einem einzigen Masterbatch enthalten sind.

Wenn das gesamte geforderte Eigenschaftsspektrum durch verschiedene Masterbatche oder auch in Kombination mit Additiven zusammengestellt werden muß, so ist dies sehr aufwendig, oft unmöglich, aber sicher wesentlich kostenaufwendiger, da dies auch eine entsprechend ausgelegte Infrastruktur der Anlagen bedingt.

Für die Verpackungsindustrie und insbesondere für die Verpackungsfolienhersteller wäre es sehr wünschenswert, für die Produktion von Polyamidfolien einen einzigen Masterbatch zu haben, welcher Folien mit den folgenden Vorteilen ergibt:
- deutliche Vorteile bei der Folienweiterverarbeitung aufgrund besserer Gleiteigenschaften und kürzerer Abpackzyklen auf Verpackungsmaschinen,
- keine Blockneigung der Folie, insbesondere bei den zum Kleben neigenden Copolyamiden,
- absolute Sterilisationssicherheit ohne unkontrolliertes Ausblühen,
- Einstellen der geforderten Folienleistungen in Abhängigkeit von der Menge der Masterbatch-Zugabe,
- lebensmittelsichere Masterbatch-Formulierung.

Ausgehend hiervon ist es die Aufgabe der vorliegenden Erfindung, einen neuen Masterbatch vorzuschlagen, der insbesondere mit dem Basismaterial eine gute Verträglichkeit aufweist und zu erhöhten Gleiteigenschaften bei den hergestellten Artikeln führt. Die hergestellten Artikel sollen weiterhin eine Antiblockfunktion aufweisen. Wünschenswert ist ferner, daß das Produkt sterilisationssicher ist.

Diese Aufgabe wird in bezug auf den Masterbatch durch die kennzeichnenden Merkmale des Anspruches 1 und hinsichtlich der Anwendung durch die Merkmale der Ansprüche 7 und 8 gelöst. Die Unteransprüche zeigen vorteilhafte Weiterbildungen auf.

Erfindungsgemäß enthält der Masterbatch demnach 60 bis 95 Gew.% eines Polyamid-Trägermaterials und 2 bis 20 Gew.% NN'Ethylenbisfettsäureamid sowie 1,5 bis 10 Gew% Microtalk und 1,5 bis 10 Gew% Calciumcarbonat sowie zu 100 Gew.% ergänzte Anteile an Zusatzstoffen.

Überraschenderweise hat es sich gezeigt, daß mit den vorstehend beschriebenen Formulierungen bei den Endprodukten die gewünschten Eigenschaften wie gleitfähige Folien, sterilisierbare Folien sowie Antiblockeigenschaften erreicht werden können. Auch für den Fachmann so nicht vorhersehbar ist vor allem, daß alle Eigenschaften gleichzeitig realisiert werden können. Mit dem erfindungsgemäßen Masterbatch ist es deshalb zum erstenmal möglich, Endprodukte gezielt in verschiedenen Eigenschaften günstig zu beeinflussen.

Als Polyamid-Trägermaterial können an und für sich alle gängigen Polyamidtypen eingesetzt werden. Bevorzugt ist es, wenn als Polyamid-Trägermaterial Copolyamid PA 6/12, Polyamid 6, Polyamid 12 oder amorphe Polyamide wie Polyamid 6I/6T verwendet werden. Als besonders günstig hat es sich erwiesen, wenn als Polyamid-Trägermaterial Copolyamide PA 6/12 mit Schmelztemperaturen von 130 bis 150 °C eingesetzt werden. Ein entscheidender Vorteil dieses Copolyamids 6/12 ist der, daß bei diesen Polymeren sich der Schmelzpunkt durch das Verhältnis von Caprolactam zu Laurinlactam in einem breiten Gebiet einstellen läßt und somit eine universelle Einsetzbarkeit erreicht werden kann.

Wesentlich beim Anmeldungsgegenstand ist, daß 60 bis 95 Gew.% des vorstehend beschriebenen Polyamid-Trägermaterials ausschließlich in Kombination mit einem speziell ausgewählten modifizierten synthetischen Fettamidwachs, nämlich mit 2 bis 20 Gew.% NN'Ethylenbisfettsäureamid, eingesetzt wird. Als vorteilhaft hat es sich herausgestellt, wenn ein NN'Ethylenbisfettsäureamid mit einem C18-Fettsäureanteil von mindestens 60 %, bevorzugt mit einem C18-Fettsäureanteil von mindestens 90 %, eingesetzt wird. Nur dadurch ist es möglich, daß die mit dem erfindungsgemäßen Masterbatch hergestellten Folien ausgezeichnete Gleiteigenschaften aufweisen.

Die erfindungsgemäße Masterbatch-Formulierung, wie vorstehend beschrieben, enthält zusätzlich noch 1,5 bis 10 % Microtalk als Nukleierungsmittel und 1,5 bis 10 % Calciumcarbonat als Antiblockmittel sowie zu 100 Gew.% ergänzte Anteile an Zusatzstoffen.

Eine besonders bevorzugte Masterbatch-Formulierung besteht aus 80 bis 85 Gew.% PA 6/12, 5 bis 10 Gew.% NN'Ethylenbisstearamid, 5 Gew.% Microtalk und 5 Gew.% Calciumcarbonat. Besonders die vorstehend erwähnte Formulierung führt zu Produkten, die alle gewünschten Eigenschaften besitzen.

Die Herstellung der Masterbatche erfolgte auf einem marktüblichen Zweiwellen-Extruder, z.B. der Fa. Werner + Pfleiderer, Deutschland. Als günstig zeigt sich insbesondere das tiefschmelzende PA 6/12-Trägermaterial, welches deutlich niedrigere Extrusionstemperaturen benötigte als die höherschmelzenden Polyamide. Dies ergibt eine geringe thermische Belastung der eingearbeiteten Additive, so daß diese ihre Effizienz weitestgehend beibehalten.

### Beispiele:

### Herstellung der Masterbatche

Die Masterbatche wurden auf einem kommerziell erhältlichen Zweiwellen-Extruder (ZSK 30) der Fa. Werner + Pfleiderer hergestellt. Das Polyamid-Trägermaterial wurde direkt in den Einzug gegeben, während die vorgemischten Additive erst in der dritten Zone über einen "Sidefeeder" zudosiert wurden. Diese Anordnung wurde gewählt, um die Additive so wenig wie möglich einer thermischen Belastung auszusetzen. Als günstig erwies sich insbesondere die Verwendung von tiefschmelzenden Copolyamiden 6/12 als Trägermaterial, da sich diese bei deutlich niedrigeren Extrusionstemperaturen von 160 bis 180 °C verarbeiten lassen.

Die genaue Zusammensetzung der Masterbatche, welche für die Herstellung der verschiedenen Folien und die nachfolgenden Prüfungen eingesetzt wurden, ist in Tabelle 1 festgehalten. Die spätere Bezeichnung der Folie entspricht der Bezeichnung des eingesetzten Masterbatches.

**Tabelle 1:**

| **Masterbatchformulierungen für die Testfolienherstellung** | | | | |
|---|---|---|---|---|
| Zusammensetzung | Formulierungen (Gew.-%) | | | |
| | B | C | D | E |
| Polyamid 6/12 | 80 | 85 | 94,5 | - |
| Polyamid 6 | - | - | - | 80 |
| NN'Ethylenbisstearamid | 10 | 5 | 2.5 | 10 |
| Microtalk | 5 | 5 | 1.5 | 5 |
| Calciumcarbonat | 5 | 5 | 1.5 | 5 |

Bei der Verwendung von PA-6 als Trägermaterial wurden die üblichen Verarbeitungstemperaturen von 250 bis 270 °C angewendet.

### Herstellung der Monoflachfolien

Die erfindungsgemäß hergestellten Masterbatche wurden in Konzentrationen von 1 bis 8 % einem PA 6 (Grilon F34, EMS-CHEMIE AG) zugegeben, wobei sich PA 6 und Masterbatch immer auf 100 % ergänzten.

Die bevorzugte Zusammensetzung betrug 98 % des PA-Grundmaterials und 2 % des Masterbatches.

Die Mischungen wurden auf einem Flachfolienextruder (30-iger Flachfolienextruder der Fa. Collin, D = 30 mm: L/D = 25) zu Folien verarbeitet, wobei folgende Verfahrensparameter eingehalten worden sind:
- Zylindertemperatur: 260 bis 270 °C
- Drehzahl: 40 bis 60 U/min
- Massedruck: 5·10⁶ Pa (= 50 bar)
- Abzug: 5 bis 10 m/min
- Chillroll Temperatur: 95 °C.

Es wurden folgende PA 6 Folien für die Vergleichsmessungen hergestellt.

| | | |
|---|---|---|
| A | 2% | Kommerziell erhältlicher Masterbatch Reed Spectrum der Firma Reed Spectrum, Holden, MA 01520-1849 USA |
| B | 2% | Masterbatch, erfindungsgemäß nach Masterbatch-Rezeptur B |
| C | 2% | Masterbatch, erfindungsgemäß nach Masterbatch-Rezeptur C |
| D | 2% | Masterbatch, erfindungsgemäß nach Masterbatch-Rezeptur D |
| E | 2% | Masterbatch, erfindungsgemäß nach Masterbatch-Rezeptur E |
| F | ohne | Masterbatchzusatz |

Die Herstellung sämtlicher Folien erfolgte unter identischen Bedingungen.

### Resultate:

### Gleiteigenschaften:

Die Gleiteigenschaften wurden nach DIN 53 375 bestimmt. Entsprechend dieser Vorschrift wurde ein 100 mm x 100 mm großes Folienstück über eine Stahlplatte mit definierter Rauhigkeit bei einer festgelegten Geschwindigkeit von 100 mm/min gezogen. Gemessen wurde eine 50 µm Flachfolie: Chillroll-Temperatur 95 °C, Temperatureinstellung 260 bis 270 °C. Die benötigte Zugkraft wurde dann in einen dimensionslosen relevanten Reibungskoeffizienten umgerechnet.

Die Meßresultate sind in der Figur 1 zusammengestellt.

Die Resultate zeigen klar, daß die von der Industrie für Verpackungsautomaten geforderten niedrigen Reibungskoeffizienten für Folien von ca 0.2 nur mit der Folie B, hergestellt mit 2% des erfindungsgemäßen Masterbatch erhalten werden kann. Die Resultate zeigen auch den Einfluß des NN'Ethylenbisstearamid im Masterbatch auf den Reibungskoeffizienten. Mit abnehmenden Mengen der NN'Ethylenbisstearamide im Masterbatch wird auch der Reibungskoeffizient entsprechend verschlechtert.

### Sterilisationssicherheit

Das erfindungsgemäß verwendete Gleitmittel, das NN'Ethylenbisstearamid, besitzt einen Schmelzpunkt von ca. 140 °C. Die üblichen Sterilisationsbedingungen werden in Wasserdampf bei 121 °C während 30 Minuten durchgeführt.

Von den sterilisierten erfindungsgemäß hergestellten Folien zeigte keine irgendwelche Ausblühungen.

### Antiblockfunktion

Zur Prüfung der Antiblock-Eigenschaften wurden verschiedene Polyamid- und Copolyamid-Folien mit dem erfindungsgemäßen Masterbatch Typen B auf einer Collin-Flachfolienanlage sowie auf einer 3-Schicht-Blasfolienanlage der Firma Alpine hergestellt.

In der Tabelle 2 sind die für die verschiedenen Polyamid-Folien notwendigen Konzentrationen an Masterbatch festgehalten, damit Produktion problemlos erfolgen kann.

**Tabelle 2**

| **Notwendige Antiblock-Masterbatch-Konzentration zur Produktion verschiedener PA-Folien** | |
|---|---|
| Polyamid-Folientyp | Erforderliche Masterbatch Konzentration |
| PA 6 | 1 bis 2 % |
| PA 6/12 | 3 bis 4 % |

Die Resultate in Tabelle 2 zeigen, daß die Menge des notwendigen Masterbatch-Zusatzes vom Typ der produzierten Polyamid-Folie abhängig ist. Für die Produktion von Copolyamidfolie ist ein höherer Masterbatch-Zusatz erforderlich als für ein Homopolyamid 6.

### Verträglichkeit

Zur Überprüfung der Verträglichkeit wurden von den Folien B, E und F Vergleichsmessungen bezüglich der mechanischen Eigenschaften und der Sauerstoff-Gaspermeationswerte durchgeführt. Wie aus den Resultaten aus Tabelle 3 ersichtlich, ist in keinem Fall eine negative Beeinflussung der Eigenschaften durch den erfindungsgemäßen Masterbatch-Zusatz festzustellen.

In bezug auf die Transparenz und die Sauerstoffbarrierwerte der Folien ist sogar eine Verbesserung feststellbar. Die verbesserte Transparenz kann durch eine gleichmäßigere Kristallinität erklärt werden.

**Tabelle 3**

| **Einfluß des erfindungsgemäßen Masterbatch-Zusatzes auf die mechanischen Eigenschaften und die Sauerstoffpermeabilität von PA-6 Folien** | | | | |
|---|---|---|---|---|
| Folieneigenschaften | Einheit | Folie B (mit 2% MB) | Folie E (mit 2% MB) | Folie F (ohne MB) |
| Reißfestigkeit | N/mm² | 101 | 102 | 100 |
| Reißdehnung | % | 458 | 460 | 460 |
| O₂ Barriere (23°C/85% r.F.) | cm³/m² 24h bar | 42 | 45 | 70 |

### Prüfstandards

Reißfestigkeit und Reißdehnung wurden nach ISO 1184 bestimmt. Sauerstoffdurchlässigkeit wurde nach ASTM D 3985 gemessen.

## Patentansprüche

1. Masterbatch auf Polyamid-Basis mit Gleitmittel und Zusatzstoffen wie Nukleierungs-, Antiblock-, Antioxidations- und Mastikations-Hilfsmittel,
**dadurch gekennzeichnet, daß**
er 60 bis 95 % eines Polyamid-Trägermaterials und 2 bis 20 % NN'Ethylenbisfettsäureamid als Gleitmittel und 1,5 bis 10 Gew.-% Microtalk als Nukleierungsmittel, 1,5 bis 10 Gew.-% Calciumcarbonat als Antiblockmittel sowie zu 100 Gew.-% ergänzte Anteile an Zusatzstoffen enthält.

2. Masterbatch gemäß Anspruch 1, **dadurch gekennzeichnet, daß** er 80 bis 85 % des Polyamid-Trägermaterials und 5 bis 10 % des Gleitmittels enthält.

3. Masterbatch gemäß Anspruch 1 oder 2, **dadurch gekennzeichnet, daß** das Polyamid-Trägermaterial Copolyamid PA 6/12, Polyamid 6, Polyamid 12 oder amorphe Polyamide wie Polyamid 6I/6T ist.

4. Masterbatch nach Anspruch 3, **dadurch gekennzeichnet, daß** das Copolyamid PA 6/12 eine Schmelztemperatur von 130 bis 150 °C hat.

5. Masterbatch nach mindestens einem der Ansprüche 1 bis 4, **dadurch gekennzeichnet, daß** das Gleitmittel ein NN'Ethylenbisfettsäureamid mit einem C 18 Fettsäureanteil von mindestens 60 %, bevorzugt mit einem C 18 Fettsäureanteil von mindestens 90 % ist.

6. Masterbatch nach mindestens einem der Ansprüche 1 bis 5, **dadurch gekennzeichnet, daß** er aus
80 bis 85 Gew.-% PA 6/12,
5 bis 10 Gew.-% NN'Ethylenbisfettsäureamid,
5 Gew.-% Microtalk und
5 Gew.-% Calciumcarbonat
besteht.

7. Anwendung des Masterbatches nach mindestens einem der Ansprüche 1 bis 6, **dadurch gekennzeichnet, daß** er zur Herstellung von Flachfolien, Blasfolien, Rohren, Blasform- und Spritzgußartikeln verwendet wird.

8. Anwendung des Masterbatches nach mindestens einem der Ansprüche 1 bis 6, **dadurch gekennzeichnet, daß** er zur Herstellung von Monofolien und Mehrschichtfolien eingesetzt wird.

## Claims

1. Masterbatch based on polyamide with lubricant and additives such as nucleating agent, anti-blocking agent, antioxidant and mastication aid,
**characterised in that**
it contains 60 to 95% of a polyamide support material and 2 to 20% N,N'-ethylenebis fatty acid amide as lubricant and 1.5 to 10% w/w microtalc as nucleating agent, 1.5 to 10% w/w calcium carbonate as anti-blocking agent and proportions of additives made up to 100% w/w.

2. Masterbatch according to claim 1, **characterised in that** it contains 80 to 85% of the polyamide support material and 5 to 10% of the lubricant.

3. Masterbatch according to claim 1 or 2, **characterised in that** the polyamide support material is copolyamide PA 6/12, polyamide 6, polyamide 12 or amorphous polyamides, such as polyamide 6I/6T.

4. Masterbatch according to claim 3, **characterised in that** the copolyamide PA 6/12 has a melting point of 130 to 150°C.

5. Masterbatch according to at least one of claims 1 to 4, **characterised in that** the lubricant is an N,N'-ethylenebis fatty acid amide with a proportion of C 18 fatty acid of at least 60%, preferably with a proportion of C 18 fatty acid of at least 90%.

6. Masterbatch according to at least one of claims 1 to 5, **characterised in that** it consists of
80 to 85% w/w PA 6/12,
5 to 10% w/w N,N'-ethylenebis fatty acid amide,
5% w/w microtalc and
5% w/w calcium carbonate.

7. Use of the masterbatch according to at least one of claims 1 to 6, **characterised in that** it is used for the production of flat films, blown films, pipes, blow-moulded and injection-moulded articles.

8. Use of the masterbatch according to at least one of claims 1 to 6, **characterised in that** it is used for the production of monofilms and multi-layer films.

## Revendications

1. Mélange-maître à base de polyamide comprenant des agents lubrifiants et additifs tels que les auxiliaires de nucléation, d'antiblocage, d'anti-oxydation et de mastication,
**caractérisé en ce**
**qu'**il contient entre 60 et 95% d'un support polyamide et entre 2 et 20% de NN'- éthylène-bis-amide d'acide gras comme agent lubrifiant et entre 1,5 et 10% en poids de micro-talc comme agent de nucléation, entre 1,5 et 10% en poids de carbonate de calcium comme agent d'antiblocage ainsi que 100% en poids de parties complémentaires d'additifs.

2. Mélange-maître selon la revendication 1, **caractérisé en ce qu'**il contient entre 80 et 85% du support polyamide et entre 5 et 10% de l'agent lubrifiant.

3. Mélange-maître selon la revendication 1 ou 2, **caractérisé en ce que** le support polyamide est un copolyamide PA 6/12, un polyamide 6, un polyamide 12 ou des polyamides amorphes tels que le polyamide 6I/6T.

4. Mélange-maître selon la revendication 3, **caractérisé en ce que** le copolyamide PA 6/12 a une température de fusion comprise entre 130 et 150°C.

5. Mélange-maître selon au moins l'une des revendications 1 à 4, **caractérisé en ce que** l'agent lubrifiant est un NN'- éthylène-bis-amide d'acide gras avec une teneur en acide gras en C 18 d'au moins 60%, de préférence avec une teneur en acide gras en C 18 d'au moins 90%.

6. Mélange-maître selon au moins l'une des revendications 1 à 5, **caractérisé en ce qu'**il est constitué de
80 à 85% en poids de PA 6/12
5 à 10% en poids de NN'-amide d'acide gras éthylène-bis
5% en poids de micro-talc et
5% en poids de carbonate de calcium.

7. Utilisation du mélange-maître selon au moins l'une des revendications 1 à 6, **caractérisée en ce qu'**il est utilisé pour la fabrication de lamelles plates, de lamelles de soufflage, de tubes, de moules de soufflage et de moule d'injection.

8. Utilisation du mélange-maître selon au moins l'une des revendications 1 à 6, **caractérisée en ce qu'**il est utilisé pour la fabrication de mono-lamelles et de lamelles multicouches.
